# EUROPEAN PATENT APPLICATION

(11) **EP 4 772 019 A1**
(43) Date of publication of application: **08.07.2026**
(21) Application number: 24919078.6
(22) Date of filing: 02.09.2024
(51) Int. Cl.: A01G 17/00, A01G 17/02, A01G 17/04, A01G 17/06, A01G 17/10

(54) **STRUCTURE AND SYSTEM FOR GROWING GRAPES**

(30) Priority: 16.01.2024 PE 0000962024
(71) Applicant: Agridavinci Pte. Ltd, Singapore (SG)
(72) Inventor: LIRA VENEGAS, Eugenio, Lima, 15023 (PE); GELLER HAGG, Jonathan Michael, Lima, 15072 (PE)
(74) Representative: JD&P Patent Attorneys Joanna Dargiewicz & Partners
(86) International application number: PCT/PE2024/050018
(87) International publication number: WO 2025/155208

(57) **Abstract**

The present invention relates to a grape cultivation structure (1) characterized in that it comprises a post (A) with a hole (O1) that pierces the post (A) and through which a wire (A0) passes to support the horizontal trunk of the vine or plant, and where the post (A) also comprises a temporary arm (B1) or a permanent arm (B) that can be straight or bent in half or split in half forming an angle between 0 and 80°, and optionally two diagonals (C) and a cultivation system comprising a plurality of grape cultivation structures (1) comprising a plurality of posts (A) comprising each post ( A) a hole (O1) that pierces said post (A) and through which a wire (A0) passes that supports the horizontal trunk of the vine or plant, and wherein the post (A) also comprises a temporary arm (B1) or a permanent arm (B) and optionally two diagonals (C).

## Description

### TECHNICAL FIELD

The present invention relates to the technical field of agriculture, especially the field of cultivation and production of table grapes and/or wine grapes.

### STATE OF THE ART

The cultivation and production of grapes, mainly for use as raw material for table grapes and grapes for wine production, requires structures that can facilitate and stimulate the growth of grapes in a grape field.

The state of the art includes document US3,807,089, which describes a plant trellis system and stake supports for it, of simplified construction and maintenance-free to support grapevines and similar plants; such that grapes or other fruits can be harvested mechanically in an expeditious manner without damaging the plant or trellis element and where the fruits are exposed to maximum sunlight during the growing season.

Document US5,063,709 is also known, which provides a trellis support device consisting of elongated arm members joined and permanently secured by a horizontal crossbar. The lower center point of the V-shaped arm members and the crossbar each use U-shaped bolts to attach to grape stakes, which may be made of wood or metal. The arm members and crossbar have slots at the distal end of each member to receive the tension cables of the trellis system.

For its part, document US5,966,867 shows a device comprising a cross arm for attachment to a grape stake for use in supporting vines or fruit trees, which includes raised ribs, aligned slots, and a pattern of holes to receive the legs of a U-shaped bolt that rigidly secures the crossbar to the stake with a side edge of the stake firmly anchored in notches.

On the other hand, document CN201733682 shows a V-shaped grape trellis comprising a plurality of support frames and three thread-like objects connected to each support frame, wherein each support frame consists of a base, a vertical post, and a crossbar, wherein the vertical post is fixed to the base, the crossbar is fixed horizontally to the upper end of the vertical post, and latch hooks (5) are fixed to both ends of the crossbar, and another latch hook is fixed to the base, and the two ends of the crossbar are fixed with tension bars, and wherein the lines form a "V" shape with each other.

Document CN206993903 is also known, which reveals a configuration for grape cultivation, including a column, a wire mesh, a cross arm, and a U-shaped joint, where the cross arm may have steel rings welded to both sides of the arm or slots on both sides of the arm that direct the wires.

In this regard, there is still an unmet need to provide a novel structure that combines the advantages of the Spanish-style vine arbor and the Californian "T" vine arbor in a single design, allowing for the mechanization of various tasks with existing equipment and manual labor at an accessible height without the aid of ladders, platforms, or stilts, all of which are impossible in the Spanish vine arbor, and to keep the fruit protected from the wind by the side curtain it forms, or to have the fruit on a flat surface with the clusters hanging down without anything touching or scratching them, a favorable condition for obtaining quality fruit. This new combination of technical characteristics, which will be described later in this disclosure, allows for lower costs without losing quality and greater safety for personnel and ease of work.

The present invention presents a vine arbor structure characterized by having a horizontal structural piece or interchangeable arm where a first temporary arm is used for the first year and year of formation at a very low cost, which significantly reduces the initial investment, and a second permanent arm that allows for better management of the vine crop and greater grape production.

These advantages cannot be achieved in their entirety by any current driving system, including those already mentioned, such as the Spanish vine arbor, the Californian T-shaped structure, the Gable or Open Gable, or any modification of the above.

Therefore, it is clear that the present invention contributes to the state of the art, as it presents a new structure that is easy to install and provides a configuration of elements that meet the needs of a vine arbor or structure for growing grapes with better results in grape production.

### SUMMARY

The present invention relates to a grape cultivation structure (1) characterized in that it comprises a post (A) with a hole (O1) that pierces the post (A) and through which a wire (A0) passes to support the horizontal trunk of the vine or plant, and where the post (A) also comprises a temporary arm (B1) or a permanent arm (B) that can be straight or bent in half or split in half forming an angle between 0 and 80°, and optionally two diagonals (C) and a cultivation system comprising a plurality of grape cultivation structures (1) comprising a plurality of posts (A) comprising each post ( A) a hole (O1) that pierces said post (A) and through which a wire (A0) passes that supports the horizontal trunk of the vine or plant, and wherein the post (A) also comprises a temporary arm (B1) or a permanent arm (B) and optionally two diagonals (C).

### DESCRIPTION OF THE FIGURES

Figure 1 shows the vine arbor-type structure (1) with the temporary arm (B1) according to the present invention.
Figure 2 shows the vine arbor-type structure (1) with the permanent arm where the permanent arm (B) is straight according to the present invention.

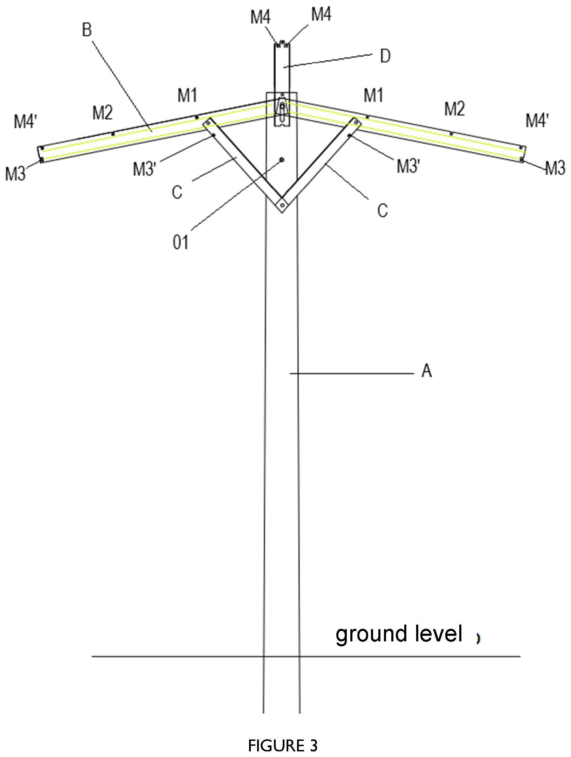

Figure 3 shows an additional mode of vine arbor-type structure (1) in which the permanent arm is bent or split in half and at an acute angle to the horizontal.

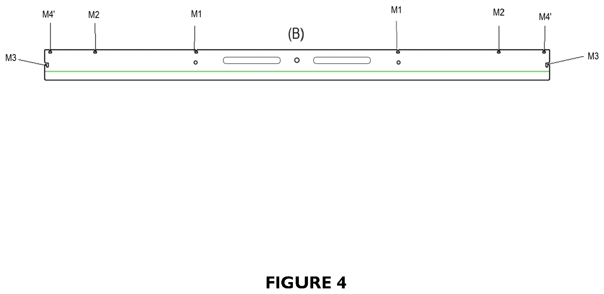

Figure 4 shows the shape of the permanent straight arm (B) of the structure according to the present invention, where the green line represents the 90-degree bend line to form an "L" profile.

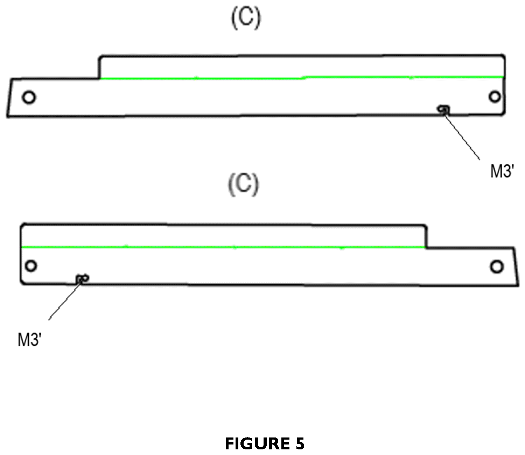

Figure 5 shows the diagonals (C) where the green lines represent the 90-degree bend line.

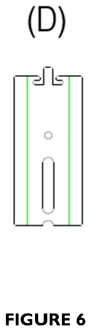

Figure 6 shows the piece (D) that allows the wires to be held without crossing, where the green line represents the 90-degree bend line to form an "L" profile.

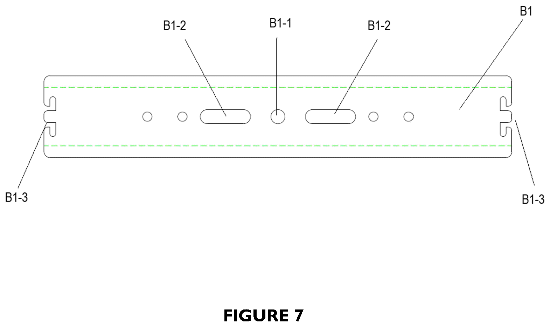

Figure 7 shows the structural piece (B1) for the first and second years of training, where the green line represents the 90-degree bend line to form an "L" profile. In one mode of the invention, this structural piece, after being present in the vine arbor structure of the invention, can be cut in half to be subsequently installed to form the structure (D) where the foliage wires (4) of Figure 1 are held.

### DETAILED DESCRIPTION OF THE INVENTION

The present invention relates to a grape cultivation structure and system. The structure (1) comprises a post (A) that includes a hole (O1) that pierces the post (A) and through which a wire (A0) passes to support the horizontal trunk of the vine or plant, the post (A) also comprises a temporary arm (B1) or a permanent arm (B) that can be straight or bent in half or split in half forming an angle between 0 and 80°, and optionally two diagonals (C), where the post (A) can be made of wood, concrete, steel, or any other material that provides sufficient support with its base buried in the ground.

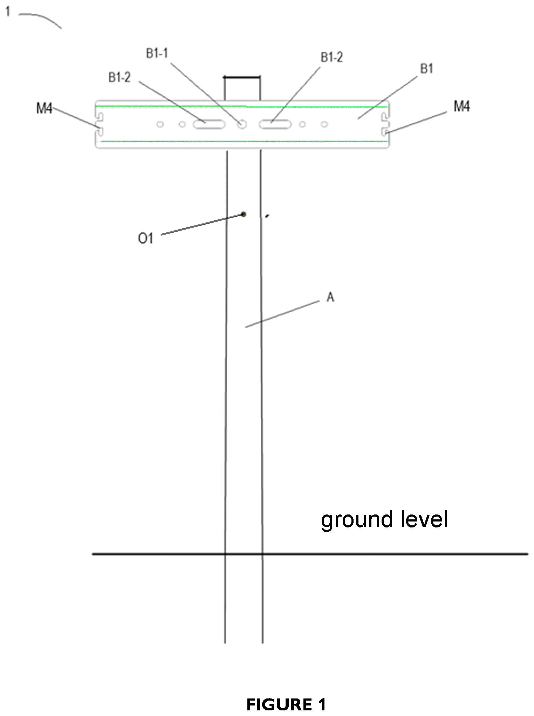

As shown in Figure 1, a temporary arm (B1) is attached to post (A) of structure (1) through a bolt, screw, clamp, or any other fastening method. This arm is initially placed for the first year and eventually the second year of plant or vine growth. The temporary arm (B1) is of a specific length, for example, 40 cm or any other desired length, and of a specific width, for example, between 2 cm and 20 cm. As mentioned above, in the first stage, i.e., up to the first two years, the arm (B1) is installed at the top of the post (A), which comprises a central hole (B1-1) and elongated holes (B1-2) and side channels (B1-3). Depending on the material of the post (A), for example, if the post (A) is made of wood, the arm is fixed through the central hole (B1-1) through a screw; and, for example, if the post (A) is made of a material such as cement, a U-shaped bolt is used, which passes through the elongated holes (B1-2). To the right and left of the temporary arm (B1) are lateral notches (M4) where wires are placed, with the wires entering these notches (M4) and being held in place.

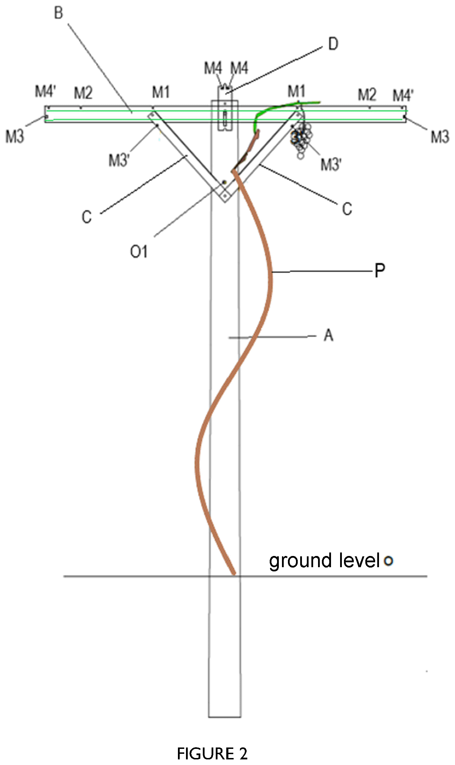

After the first year of plant growth, this temporary arm (B1) can be removed and cut in half, with one of the halves being placed vertically at the top of the post (A) through a bolt in the elongated hole (B1-2) to hold the foliage wires (movable wires) as shown in Figure 2, which illustrates the final configuration of the vine arbor structure (1) according to the invention for subsequent years of plant or vine growth, where a plant (P) is shown being guided by the central axis and its upper end with the fruit on the wire (A1) located in one of the notches M1 on the arm.

As shown in Figure 2, which corresponds to the final structure of the vine arbor, the temporary arm (B1) has been replaced by an L-shaped arm (B) comprising notches M1, M2, and M4', located at the top of said permanent arm (B) symmetrically on either side of the central part of the permanent arm (B) where it joins the post (A) and arranged equidistantly depending on the length of the arm (B) and where the length is sufficient to have a flat production surface according to the variety, vigor of said variety, location, and distance between the rows of plants. The arm (B) also comprises notches (M3) located on the side of said arm (B). The height of attachment of said arm (B) shall be such that a worker of average height can work underneath it, reaching the clusters comfortably and without the aid of any additional attachments such as benches, stilts, etc., nor so low as to force him to work crouched or bent over.

As shown in Figure 2, the post (A) optionally has two diagonals (C), which can serve the following functions: a) reducing the strength specification of the main support (B), b) preventing said arm (B) from pivoting, a function that could be replaced by adding a second bolt to the arm (B), or another mechanism to prevent said arm (B) from pivoting, and c) provide support to the moving wire for pruning (wire A3 that passes from notch M3 to notch M3' located on the diagonals (C). These diagonals (C) may be L-shaped to increase their strength and extend from the post (A) to the arm (B). The guide wire (A0) can be passed through the center of the post (A) through the hole (A1) in the post or held to it on one side at a convenient height, depending on the variety and location. The fixed wires (A1) and (A2) are housed in notches M1 and M2, which are intended to support the shoots and fruits of the vines or plants, and the notch (M3) holds the wire (A3), which can be movable if the structure includes the optional diagonals (C).

As mentioned above, a piece (D) corresponding to one half of the temporary arm (B1) is installed at the top center of the post (A). This piece is placed vertically at the top of the central post (A) through a bolt in the elongated hole B1-2 to hold the foliage wires (movable wires (A4)) which comprises the two notches (M4) for supporting the foliage wires (A4), where said piece (D) is attached to the upper central part of the post (A) with the same device that supports the main arm (B). This piece (D), which corresponds to one half of the temporary arm (B1), allows the foliage wires (A4) to be held in place without crossing each other through the two notches (M4) shown in Figure 2, located at the top of the piece (D), but which allow the foliage wires (A4) to be very close together so that shoots cannot grow between them and, after the wires (A4) are activated, would not be moved to the desired position.

According to Figure 2, the definitive vine arbor structure for growing grapes according to the present invention comprises the following elements:
A. Vertical post,
B. Temporary arm (B1) or Permanent arm (B);
C. Optionally, two diagonals (C); and
D. Piece (D).

A0: conduction wire of the permanent arm (B), which is a fixed wire and passes through the post (A) and the series of posts (A) arranged in a row at a given distance;
A1: A first cane-conducting wire for the year, located in the notch (M1), which is a fixed wire (no need to move it during the season). However, the position of this first wire 1 in the permanent arm structure (B) concerning the center of the arm structure (B) can be varied so that the distance between this wire A1 and the other wires is the most appropriate for the characteristics of the crop being grown;
A2: A second cane-conducting wire for the year, which is a fixed wire with the same characteristics as the first wire (A1) mentioned above;
A3: A third cane-conducting wire for the year, where this wire (A3) begins the campaign (this term being understood as the growing season) at the notch (M3) on the edge of the L-shaped arm (B), where this position below the grid (set of wires on the structure that serves as support for the vine) favors the natural fall of the shoots to form the curtain of foliage on both sides of the row formed by the crop in a vine arbor structure system according to the present invention. The notch (M3') on the diagonal (C) serves to facilitate mechanical or manual pruning, as the case may be, and when such diagonals (C) are present;
A4: The foliage wire, which is a movable wire, has the function of laying the shoots on the flat grid formed by wires A1, A2, and A3 on both sides of the permanent arm (B). As shown in Figure 2, the foliage wire (A4) starts at the center position of the arm (B) in the piece (D) in the notches (M4) and then, when the shoots need to be laid down, it is moved to the position in the notch (M4').

In an additional mode of the invention, the permanent arm (B) is an arm bent in half at an acute angle to the horizontal in the form of "drooping arms," where the angle is between 0° and 80° to the horizontal.

All L-shaped metal profile pieces are designed with thicknesses that provide adequate resistance to the load imposed by the variety and expected production. These pieces should preferably be galvanized or made of stainless steel to enhance their durability and reduce maintenance requirements. The wires are typical industry wires, preferably galvanized and with high carbon content.

The invention also refers to a cultivation system comprising a plurality of grape cultivation structures (1) comprising a plurality of posts (A), each post (A) comprising a hole (O1) that pierces said post (A) and through which a wire (A0) passes, supporting the horizontal trunk of the vine or plant, and wherein the post (A) also comprises a temporary arm (B1) or a permanent arm (B) and optionally two diagonals (C).

## Claims

1. A grape cultivation structure (1) **characterized in that** it comprises a post (A) comprising a hole (O1) that pierces the post (A) and through which a wire (A0) passes that supports the horizontal trunk of the vine or plant, and wherein the post (A) also comprises a temporary arm (B1) or a permanent arm (B) that can be bent at an angle between 0 and 80° relative to the horizontal and, optionally, two diagonals (C).

2. The grape cultivation structure (1) according to claim 1, **characterized in that** a temporary arm (B1) is fixed to the post (A) through a bolt, screw, clamp, or any other fastening method, a temporary arm (B1) that is initially placed for the first year and eventually the second year of plant or vine growth, and where said temporary arm (B1) is of a specific length and comprises a central hole (B1-1), elongated holes (B1-2), and lateral channels (B1-3).

3. The grape cultivation structure (1) according to claim 1, **characterized in that** the post (A) is made of wood, concrete, steel, or any other material that provides sufficient support when its base is buried in the ground.

4. The grape cultivation structure (1) according to claim 1, **characterized in that** if the post (A) is made of wood, the temporary arm (B1) is fixed through the central hole (B1-1) through a screw; and, if the post (A) is made of a material such as cement, a U-shaped bolt is used that passes through the elongated holes (B1-2) of the temporary arm (B1).

5. The grape cultivation structure (1) according to claim 1, **characterized in that** on the right and left sides of the temporary arm (B1) there are lateral notches (M4) where wires are placed, where the wires enter said notches (M4).

6. The grape cultivation structure (1) according to claim 1, **characterized in that** the temporary arm (B1) is replaced by an L-shaped arm (B) comprising notches M1, M2, and M4', located on the upper part of said permanent arm (B) symmetrically on either side of the central part of the permanent arm (B) where it joins the post (A) and arranged equidistantly depending on the length of the arm (B) and where the length is sufficient to have a flat production surface according to the variety, vigor of said variety, location, and distance between the rows of plants.

7. The grape cultivation structure (1) according to claim 1, **characterized in that** the permanent arm (B) further comprises notches (M3) located on the side of said permanent arm (B).

8. The grape cultivation structure (1) according to claim 1, **characterized in that** a piece (D) corresponding to one half of the temporary arm (B1) is installed in the upper central part of the post (A) and is placed in said upper part of the central post (A) vertically through a bolt in the elongated hole B1-2 to support the foliage wires (movable wires (A4)) comprising the two notches (M4) for supporting the foliage wires (A4), wherein said piece (D) is attached to the upper central part of the post (A) with the same device that supports the main arm (B), where said piece (D) supports the foliage wires (A4) that are movable without crossing each other through the two notches (M4) located at the top of the piece (D) and which allow the foliage wires (A4) to be very close together so that shoots cannot be inserted between them which, after activating the wires (A4), they would not be moved to the desired position.

9. A cultivation system comprising a plurality of grape cultivation structures (1) comprising a plurality of posts (A), each post (A) comprising a hole (O1) that pierces said post (A) and through which a wire (A0) passes, which supports the horizontal trunk of the vine or plant, and wherein the post (A) also comprises a temporary arm (B1) or a permanent arm (B) and optionally two diagonals (C).
